# EUROPÄISCHE PATENTANMELDUNG

(11) **EP 4 436 098 A1**
(43) Veröffentlichungstag der Anmeldung: **25.09.2024**
(21) Anmeldenummer: 23176420.0
(22) Anmeldetag: 31.05.2023
(51) Int. Cl.: H04L 9/08, H04L 9/32, G06F 21/64, H04L 9/40

(54) **VERFAHREN ZUR PRÜFUNG EINER AUTHENTIZITÄT EINER NACHRICHT UND GERÄT**

(30) Priorität: 21.03.2023 EP 23163182
(71) Anmelder: Siemens Aktiengesellschaft, 80333 München (DE)
(72) Erfinder: De Santis, Fabrizio, 80634 München (DE); Furch, Andreas, 85354 Freising (DE); Safieh, Malek, 81539 München (DE)
(74) Vertreter: Siemens Patent Attorneys

(57) **Zusammenfassung**

Bei dem Verfahren zur Prüfung einer Authentizität einer Nachricht (SWU, URE) mithilfe eines Bereitstellers eines Geräts (DEV) durch dieses Gerät (DEV) wird durch das Gerät aus der Nachricht (SWU, URE) mittels eines mit einem privaten Schlüssel (SKM) des Bereitstellers umkehrbaren asymmetrischen kryptographischen Verfahrens mit einem öffentlichen Schlüssel des Bereitstellers (PKM) und mit der Nachricht (SWU) eine erste Auszeichnung (TAG1) und ein Chiffrat (CT2) generiert, wobei das Chiffrat (CT2) nachfolgend an den Bereitsteller gesendet wird und wobei vom Bereitsteller mittels des privaten Schlüssels (SKM) und des Chiffrats (CT2) mittels der Umkehrung des kryptographischen Verfahrens eine zweite Auszeichnung (TAG2) erhalten wird, wobei, vorzugsweise ausschließlich, bei einer Übereinstimmung der ersten Auszeichnung (TAG1) und der zweiten Auszeichnung (TAG2) miteinander auf die Authentizität geschlossen wird.

## Beschreibung

Die Erfindung betrifft ein Verfahren zur Prüfung einer Authentizität einer Nachricht mithilfe eines Bereitstellers eines Geräts durch dieses Gerät sowie ein Gerät.

Für zahlreiche industrielle Produkte und Lösungen wird Post-Quanten-Kryptographie zunehmend relevant. In vielen industriellen Geräten sind jedoch bislang herkömmliche kryptographische Algorithmen implementiert. Post-Quantum-Algorithmen, z. B. digitale Signaturen, sind rechenintensiv, insbesondere für ressourcenbeschränkte industrielle Geräte.

Es ist daher Aufgabe der Erfindung, ein verbessertes Verfahren zur Prüfung einer Authentizität einer Nachricht anzugeben, welches sich effizient und sicher, vorzugsweise post-quantum-sicher, einsetzen lässt. Ferner ist es Aufgabe der Erfindung, ein verbessertes Gerät anzugeben, mit welchem sich das verbesserte Verfahren einsetzen lässt.

Diese Aufgabe der Erfindung wird mit einem Verfahren zur Prüfung einer Authentizität einer Nachricht mit den in Anspruch 1 angegebenen Merkmalen und mit einem Gerät mit den in Anspruch 10 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zur Prüfung einer Authentizität einer Nachricht mithilfe eines Bereitstellers eines Geräts durch dieses Gerät werden durch das Gerät aus der Nachricht mittels eines mit einem privaten Schlüssel des Bereitstellers umkehrbaren asymmetrischen kryptographischen Verfahrens mit einem öffentlichen Schlüssel des Bereitstellers und mit der Nachricht eine erste Auszeichnung und ein Chiffrat generiert und das Chiffrat wird an den Bereitsteller gesendet und vom Bereitsteller wird mittels des privaten Schlüssels und des Chiffrats mittels der Umkehrung des kryptographischen Verfahrens eine zweite Auszeichnung erhalten, wobei, vorzugsweise ausschließlich, bei einer Übereinstimmung der ersten Auszeichnung und der zweiten Auszeichnung miteinander die, d.h. auf die, Authentizität geschlossen wird und bei einer fehlenden Übereinstimmung vorzugsweise ein Warnsignal generiert wird.

Es versteht sich, dass eine Auszeichnung im Sinne der vorliegenden Erfindung auch als sogenannter Tag bezeichnet werden kann.

Unter einer Prüfung einer Authentizität einer Nachricht kann im Rahmen dieser Erfindung bevorzugt auch eine Authentisierung eines Senders dieser Nachricht verstanden werden oder als umfasst angesehen werden.

Im Rahmen der vorliegenden Erfindung kann vorzugsweise die Prüfung einer Authentizität der Nachricht auch als Prüfung einer Authentizität und Integrität der Nachricht verstanden werden. Wenn eine an sich authentische Nachricht verändert worden ist, so würde die erfindungsgemäße Prüfung der Authentizität der Nachricht zweckmäßig fehlschlagen, sodass zugleich auch die Integrität der Nachricht mittels des erfindungsgemäßen Verfahrens geprüft wird.

Das erfindungsgemäße Verfahren eignet sich vorteilhaft für Prä- und Post-Quantum-Anwendungen. Im Gegensatz zu anderen Verfahren profitieren die vorgeschlagenen Protokolle in dieser Erfindung von Operationen, um ein gemeinsames Geheimnis zwischen zwei Parteien zu erzeugen, das zur Berechnung eines Authentifizierungstags, also einer Auszeichnung, verwendet wird. Diese Auszeichnung wird nun herangezogen, um eine kryptografische Sicherheit hinsichtlich der Authentisierung und des Integritätsnachweises der Nachricht auf der Seite des Geräts bereitzustellen.

Unter Prä-Quantum-Anwendungen sind Anwendungen zu verstehen, welche nicht resistent gegenüber Angriffen mittels Quanten-Computern ausgebildet sein müssen. Post-Quantum-Anwendungen oder Post-Quantum-Kryptographie hingegen umfasst solche Anwendungen und Verfahren, welche als besonders resistent gegenüber Angriffen mit Quanten-Computern ausgebildet sind.

Bevorzugt ist bei dem erfindungsgemäßen Verfahren das asymmetrische kryptographische Verfahren derart ausgebildet, dass es aus der Nachricht mittels eines Schlüsselkapselungsverfahrens mit einem öffentlichen Schlüssel des Bereitstellers ein Chiffrat und einen ersten Sitzungsschlüssel generiert, wobei mittels des ersten Sitzungsschlüssels gemeinsam mit der Nachricht, die vom ersten Sitzungsschlüssel und von der Nachricht abhängige erste Auszeichnung generiert wird.

Vorteilhaft kann das erfindungsgemäße Verfahren auch mit ressourcenbeschränkten industriellen Geräten ausgeführt werden. Die Rechenkomplexität von Rechnungen, welche mittels des Geräts durchgeführt werden müssen, ist bei dem erfindungsgemäßen Verfahren besonders gering gehalten.

Vorteilhaft können in dieser Weiterbildung der Erfindung KEM-Verfahren, also Schlüsselkapselungsverfahren, und/oder eine Verschlüsselung und/oder eine authentifizierte Verschlüsselung mit zugehörigen Datenberechnungen für die Authentifizierung und den Integritätsnachweis auf industriellen Geräten herangezogen werden.

Schlüsselkapselungsverfahren, auch als (engl.) "Key Encapsulation Mechanisms" (KEMs oder KEM-Verfahren oder Schlüsselkapselungsverfahren) bezeichnet, lassen sich im Vergleich zu anderen Post-Quantum-Algorithmen häufig effizienter einsetzten als digitale Signaturen, vgl. P. Schwabe, D. Stebila und T. Wiggers: Post-Quantum TLS ohne Handshake-Signaturen. In: Cryptology ePrint Archive, Paper 2020/534, 2020.

Daher stellen KEM-Verfahren für den Post-Quantum-Bereich vorteilhaft deutlich geringere Anforderungen an industrielle Geräte als signaturbasierte Verfahren.

Bei dem erfindungsgemäßen Verfahren erfolgt die Umkehrung des kryptographischen Verfahrens vorzugsweise derart, dass mittels des Chiffrats und des privaten Schlüssels des Bereitstellers ein zweiter Sitzungsschlüssel generiert wird und mittels des zweiten Sitzungsschlüssels und der Nachricht die zweite Auszeichnung generiert wird.

Geeigneterweise ist bei dem erfindungsgemäßen Verfahren das kryptographische asymmetrische Verfahren ein Schlüsselkapselungsverfahren und die Umkehrung des kryptographischen Verfahrens ein mit den Schlüsselkapselungsverfahren korrespondierendes Schlüsselentkapselungsverfahren.

Zweckmäßig ist bei dem erfindungsgemäßen Verfahren die Nachricht eine Nutzeranfrage, insbesondere eine Provisionierungs- und/oder Konfigurationsanfrage. Insbesondere für diese Anwendungsfälle ist eine Prüfung einer Authentizität einer Nachricht mithilfe eines Bereitstellers des Geräts durch dieses Gerät besonders vorteilhaft und bietet eine verbesserte Sicherheit gegenüber dem Stand der Technik.

In einer vorteilhaften Weiterbildung des erfindungsgemäßen Verfahrens ist die Nachricht eine Software und/oder ein Softwareupdate. Auch für diesen Anwendungsfall ermöglicht das erfindungsgemäße Verfahren vorteilhaft eine Prüfung einer Authentizität.

Die Erfindung gliedert sich somit zweckmäßig in verschiedene Anwendungsfälle, von denen ein erster eine sichere Konfiguration oder ein sicheres Einspielen einer Firmware oder eine sichere Softwareaktualisierung des Geräts umfasst. Ein zweiter Anwendungsfall umfasst ein sicheres Geräte-Onboarding und/oder ein Bootstrapping in einer Nutzerdomäne. In beiden Anwendungsfällen führt das Gerät Authentifizierungen bevorzugt mittels asymmetrischer Verschlüsselung und besonders bevorzugt mittels KEM-Verfahren durch, insbesondere mittels der als Kyber und/oder Classic McEliece und/oder FrodoKEM bekannten Verfahren. Besonders vorteilhaft sind bei dem erfindungsgemäßen Verfahren keine Signaturvorgänge auf Geräteseite erforderlich, sodass das erfindungsgemäße Verfahren keine besonderen Voraussetzungen an die Hardware des Geräts stellt. In weiteren vorteilhaften Ausgestaltungen lässt sich das erfindungsgemäße Verfahren auch für sonstige weitere Anwendungsfälle einsetzen.

Alternativ oder zusätzlich und ebenfalls bevorzugt wird bei dem erfindungsgemäßen Verfahren die zweite Auszeichnung über einen Nutzer erhalten, insbesondere über einen Nutzer der Nutzeranfrage.

Bei dem erfindungsgemäßen Verfahren ist das Gerät vorzugsweise ein industrielles Gerät eines industriellen Netzwerks, insbesondere eines Internet-der-Dinge-Netzwerks, und/oder ein Fertigungsgerät und/oder ein Wartungsgerät und/oder ein Logistikgerät. Zweckmäßig ist das Gerät ein IT-Gerät und/oder ein IoT-Gerät.

Das erfindungsgemäße Gerät ist ausgebildet und eingerichtet zur Ausführung eines erfindungsgemäßen Verfahrens wie vorhergehend beschrieben.

Nachfolgend wird die Erfindung anhand eines in der Zeichnung dargestellten Ausführungsbeispiels näher erläutert. Es zeigen:
- Fig. 1: einen Ablauf eines Ausführungsbeispiels des erfindungsgemäßen Verfahrens schematisch in einer Prinzipskizze sowie
- Fig. 2: ein Ausführungsbeispiel für ein erfindungsgemäßes datenzentrisches Netzwerk einer erfindungsgemäßen Fertigungsanlage.

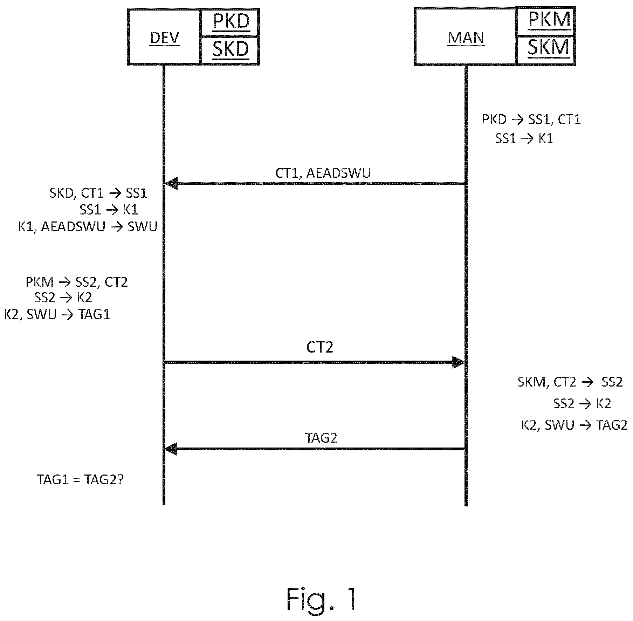

Das in Fig. 1 dargestellte Ausführungsbeispiel zeigt ein Protokoll für ein sicheres Software-Update SWU. In weiteren, nicht eigens dargestellten Ausführungsbeispielen, welche im Übrigen dem dargestellten Ausführungsbeispiel entsprechen, kann an die Stelle des Software-Updates SWU auch eine Konfiguration oder eine Firmware treten.

Bei dem Protokoll für das sichere Software-Update SWU kooperieren zwei Parteien, um das sicheres Software-Update SWU durchzuführen: einerseits ein industrielles Gerät DEV und ein Hersteller MAN des Geräts DEV. Beide Parteien müssen mit mindestens einem Schlüsselpaar für ein Schlüsselkapselungsverfahren (engl. "Key Encapsulation Mechanism", KEM), d. h. einem KEM-Schlüsselpaar mit einem öffentlichen KEM-Schlüssel und dem dazugehörigen privaten KEM-Schlüssel, ausgestattet sein.

Im dargestellten Ausführungsbeispiel besitzt jede der beiden Parteien ein vertrauenswürdiges Zertifikat für einen öffentlichen KEM-Schlüssel, welches mindestens den öffentlichen KEM-Schlüssel enthält und vor dem Start des erfindungsgemäßen Verfahrens von einer vertrauenswürdigen Partei, im vorliegenden Ausführungsbeispiel von einer Zertifizierungsstelle der PKI-Domäne des Herstellers, generiert worden ist. Solche Zertifikate können beispielsweise verwendet werden, um ein gegenseitiges Authentifizierungsverfahren zu etablieren und Sitzungsschlüssel abzuleiten, um einen sicheren Kanal zu realisieren. Ein solcher sicherer Kanal wird beispielsweise im KEMTLS-Protokoll genutzt. Wenn diese Zertifikate selbst nicht bereits als vertrauenswürdig festgestellt worden sind, sind digitale Signaturvalidierungen (im dargestellten Ausführungsbeispiel nicht gezeigt) zur Validierung der Zertifikatsketten bis hin zum vertrauenswürdigen öffentlichen Schlüssel, d. h. dem Stammzertifikat, erforderlich.
Darüber hinaus wird der öffentliche KEM-Schlüssel oder ein Zertifikat des öffentlichen KEM-Schlüssels des Herstellers während der Herstellung des Geräts DEV integritätsgeschützt im Gerät DEV gespeichert. Alternativ oder zusätzlich und allgemeiner könnte auch ein zugehöriges Wurzelzertifikat oder zugehöriger öffentlicher Schlüssel während der Herstellung des Geräts DEV in diesem Gerät DEV gespeichert werden.

Bei dem erfindungsgemäßen Verfahren wird die Authentizität und auch die Integrität des Software-Updates SWU geprüft. Dazu wird das im Folgenden schrittweise erläuterte Protokoll durchgeführt:
In einem ersten Verfahrensschritt nutzt der Hersteller MAN des Geräts DEV den öffentlichen KEM-Schlüssel PKD des Geräts DEV zur Kapselung. Die Kapselung des öffentlichen Schlüssels PKD des Geräts DEV resultiert in einem ersten Chiffrat CT1 und einem ersten Geheimnis SS1.

Aus dem ersten Geheimnis SS1 wird ein erster Sitzungsschlüssel K1 unter Verwendung einer Schlüsselableitungsfunktion KDF abgeleitet. Grundsätzlich kann in weiteren Ausführungsbeispielen auch das erste Geheimnis SS1 selbst als Sitzungsschlüssel verwendet werden. Dieser erste Sitzungsschlüssel mittels der Schlüsselableitungsfunktion KDF abgeleitete Sitzungsschlüssel K1 wird verwendet, um das Software-Update basierend auf einem AEAD-Algorithmus (engl.: "Authenticated Encryption with Associated Data", AEAD) zu einem verschlüsselten Softwareupdate AEADSWU zu verschlüsseln und hinsichtlich der Integrität zu schützen. Somit garantiert der erste Sitzungsschlüssel K1 die Integrität und die Authentizität und die Vertraulichkeit des Software-Updates SWU. Sowohl das verschlüsselte Software-Update SWU als auch das erste Chiffrat CT1 werden an das industrielle Gerät DEV gesendet.

Die bisherigen Verfahrensschritte sind bei dem erfindungsgemäßen Verfahren optional und zielen lediglich darauf ab, ein verschlüsseltes, authentisiertes und integritätsgeschütztes Software-Update SWU an ein bestimmtes Gerät DEV zu senden. Wenn lediglich Integritäts- und Authentizitätsschutz erforderlich sind, ohne dass eine Vertraulichkeit zu gewährleisten ist, kann in einem weiteren, nicht eigens dargestellten, Ausführungsbeispiel zusätzlich zum Software-Update ein Tag berechnet und gesendet werden, welches aus dem Software-Update mittels eines AEAD-Algorithmus oder einem Message Authentication Code, d. h. einem MAC oder HMAC, bezogen werden kann. Wenn das Software-Update SWU in einem weiteren, nicht eigens dargestellten, Ausführungsbeispiel im Klartext, d. h. ohne Integrität, Authentizität und Vertraulichkeitsschutz des Software-Updates SWU gesendet werden soll, sind sämtliche bisherigen Schritte nicht erforderlich, d. h. das Software-Update SWU kann einfach ohne weitere Maßnahmen an das industrielle Gerät DEV gesendet werden.

In einem nachfolgenden Verfahrensschritt erhält das Gerät DEV das Software-Update SWU in verschlüsselter Form und das Gerät DEV muss das erste Chiffrat CT1 mit seinem privaten Schlüssel SKD entkapseln, um das erste Geheimnis SS1 zu erhalten. Nur das Gerät DEV kann also das gleiche Geheimnis SS1 rekonstruieren, da der private KEM-Schlüssel SKD des Geräts DEV benötigt wird. In einem weiteren Verfahrensschritt leitet das Gerät DEV den ersten Sitzungsschlüssel K1 vom ersten Geheimnis SS1 mithilfe einer Schlüsselableitungsfunktion KDF ab. Wie oben bereits erwähnt kann in weiteren Ausführungsbeispielen grundsätzlich auch das erste Geheimnis SS1 selbst als Sitzungsschlüssel verwendet werden, sodass die Schlüsselableitungsfunktion KDF entbehrlich ist. Der erste Sitzungsschlüssel K1 wird dann verwendet, um das Software-Update SWU mit einem AEAD-Algorithmus zu entschlüsseln. Alternativ kann eine MAC- oder HMAC-Berechnung verwendet werden, wenn der Vertraulichkeitsschutz für das Software-Update SWU nicht benötigt wird. Wenn das Software-Update SWU jedoch nicht verschlüsselt worden ist, kann das Gerät DEV alle bisherigen Berechnungen ignorieren.

Anschließend führt das Gerät DEV Plausibilitäts- und Konformitätsprüfungen am Software-Update SWU durch, um beispielsweise die Gültigkeit und Eignung des Software-Updates SWU zu prüfen.

Vor der Installation des Software-Updates SWU muss das Gerät DEV das Software-Update SWU als vom zuständigen Hersteller MAN stammend authentifizieren. Dazu nutzt das Gerät DEV den öffentlichen KEM-Schlüssel PKM seines Herstellers MAN zur Kapselung. Der öffentliche Schlüssel PKM des Herstellers MAN ist während der Produktion des Geräts DEV integritätsgeschützt gespeichert. Die Kapselung des öffentlichen Schlüssels PKM des Herstellers MAN resultiert in einem zweiten Geheimnis SS2 und einem zweiten Chiffrat CT2. Das zweite Chiffrat CT2 kann direkt an den Hersteller MAN gesendet werden, während das zweite Geheimnis SS2 einer Schlüsselableitungsfunktion KDF übergeben wird, um einen zweiten Sitzungsschlüssel K2 zu erhalten. Dieser zweite Sitzungsschlüssel K2 wird verwendet, um mittels eines AEAD-Algorithmus und des Software-Updates SWU ein erstes Authentifizierungs-Tag TAG1 zu erhalten. Auch hier kann in weiteren Ausführungsbeispielen das zweite Geheimnis auch direkt als zweiter Sitzungsschlüssel verwendet werden. Alternativ kann eine MAC- oder HMAC-Berechnung verwendet werden, um dieses erste Authentisierungs-Tag TAG1 zu erhalten. Nachfolgend werden der zweite Sitzungsschlüssel K2 und das zweite Geheimnis SS2 nicht mehr benötigt und können vom Gerät DEV gelöscht werden. Das erste Authentifizierungs-Tag TAG1 muss jedoch für eine spätere Authentifizierung der Antwort des Herstellers MAN sicher, das heißt integritäts- und vertraulichkeitsgeschützt, aufbewahrt werden. Denn wenn Integrität und Vertraulichkeit des ersten Authentisierungs-Tags TAG1 nicht gewährleistet wären, könnte ein Angreifer das erste Authentifizierungs-Tag TAG1 vom Gerät DEV extrahieren und als gefälschtes erstes Authentifizierungs-Tag TAG1 zurücksenden und so fälschlich vorspiegeln, dass das Software-Update SWU vom zuständigen Hersteller MAN stammt und nicht verändert worden ist.

Da das zweite Geheimnis SS2 aus dem zweiten Chiffrat CT2 mit dem öffentlichen KEM-Schlüssel PKM des Herstellers gekapselt worden ist, ist es nur dem Hersteller MAN möglich, das zweite Geheimnis SS2 aus dem zweiten Chiffrat CT2 mit dem nur dem Hersteller MAN bekannten privaten KEM-Schlüssel SKM des Herstellers MAN zu bestimmen. Daher ist der Hersteller MAN die einzige Partei, die das zweite Geheimnis SS2 vom zweiten Chiffrat CT2 entkapseln kann. Dementsprechend erhält der Hersteller MAN das zweite Chiffrat CT2 und entkapselt dieses mit seinem privaten KEM-Schlüssel SKM und erhält darauf das zweite Geheimnis SS2. Anschließend berechnet der Hersteller MAN den zweiten Sitzungsschlüssel K2 mit Hilfe einer Schlüsselableitungsfunktion KDF. Wie oben bereits erwähnt kann in weiteren Beispielen grundsätzlich auch das zweite Geheimnis SS1 selbst als Sitzungsschlüssel verwendet werden, sodass die Schlüsselableitungsfunktion KDF entbehrlich ist.

Schließlich erhält der Hersteller MAN ein zweites Authentifizierungs-Tag TAG2 unter Verwendung seines zweiten Sitzungsschlüssels K2 und des Software-Updates SWU und eines AEAD-Algorithmus und sendet das zweite Authentifizierungs-Tag TAG2 an das Gerät DEV. Die Berechnungen mittels der Schlüsselableitungsfunktion KDF und des AEAD-Algorithmus können in nicht dargestellten Ausführungsbeispielen alternativ durch MAC- oder HMAC-Berechnungen ersetzt werden.

Das industrielle Gerät DEV empfängt das zweite Authentifizierungs-Tag TAG2 und vergleicht dieses mit dem zuvor berechneten und sicher gespeicherten ersten Authentifizierungs-Tag TAG1. Wenn erstes TAG1 und zweites Authentifizierungs-Tag TAG2 gleich sind, authentifiziert das Gerät DEV, dass das Software-Update SWU vom Hersteller MAN stammt. Denn nur der Hersteller MAN konnte das Geheimnis SS2 erhalten. Zudem kann geschlossen werden, dass das Software-Update SWU nicht modifiziert oder geändert wurde, das Software-Update SWU also integer ist, da das erste TAG1 und das zweite Authentifizierungs-Tag TAG2 gleich sind. Wenn jedoch das erste TAG1 und das zweite Authentifizierungs-Tag TAG2 nicht gleich sind, wird das Software-Update SWU nicht akzeptiert und eine Fehlermeldung oder ein Alarm ausgelöst.

Rein optional kann bei den vorhergehend beschriebenen Ausführungsbeispielen der Hersteller MAN oder ein Endbenutzer oder Bediener informiert werden, wenn das Software-Update SWU vom Gerät DEV akzeptiert worden ist und installiert werden wird oder wurde. Dies erfordert eine Änderung des in Figur 1 dargestellten Protokolls. Diese Änderung kann beispielsweise wie folgt erfolgen: Im vorhergehend erläuterten Verfahrensschritt, in welchem der Hersteller MAN das zweite Geheimnis SS2 aus dem zweiten Chiffrat CT2 entkapselt, erzeugt der Hersteller MAN zusätzlich eine Nonce N und verschlüsselt diese Nonce N mit dem zuvor generierten ersten Sitzungsschlüssel K1 und sendet das Ergebnis an das Gerät DEV. Das Gerät DEV entschlüsselt die Nonce N und gibt diese Nonce N an den Hersteller MAN zurück, wenn das Software-Update SWU akzeptiert worden ist und installiert wird. Dieser erste Sitzungsschlüssel K1 wäre vom Hersteller MAN in diesem angesprochenen Verfahrensschritt nicht verfügbar, wenn das Software-Update SWU zu Beginn im Klartext oder lediglich integritätsgeschützt an das Gerät DEV gesendet wurde. In diesem Fall muss der Hersteller MAN zusätzlich den öffentlichen KEM-Schlüssel PKD des Geräts kapseln und eine Schlüsselableitungsfunktion KDF verwenden, um einen Sitzungsschlüssel wie den ersten Sitzungsschlüssel K1 zu erhalten und die Nonce N zu verschlüsseln. Somit erkennt der Hersteller MAN, dass das Gerät DEV das SWU erfolgreich akzeptiert hat. Ein Endbenutzer oder Bediener wird dann vom Hersteller MAN über diesen Erfolg informiert.

Die vorhergehend beschriebenen Ausführungsbeispiele können optional dahingehend erweitert werden, dass eine Betriebsumgebung durch eine zweite Schutzschicht erweitert wird, indem das Software-Update SWU ein zweites Mal mit Anmeldeinformationen gekapselt wird, die dem Endbenutzer oder Bediener des Geräts DEV gehören. Auf diese Weise ist es möglich, zusätzliche Parameter vom Betreiber bereitzustellen, etwa eine Installationszeit oder eine Reihenfolge von Modulupdates, falls mehrere Modulupdates in dem Software-Update SWU enthalten sind, oder Informationen über weitere Randbedingungen der Betriebsumgebung. Diese zusätzlichen Parameter können auch zur Autorisierung zur Installation des Software-Updates SWU verwendet werden.

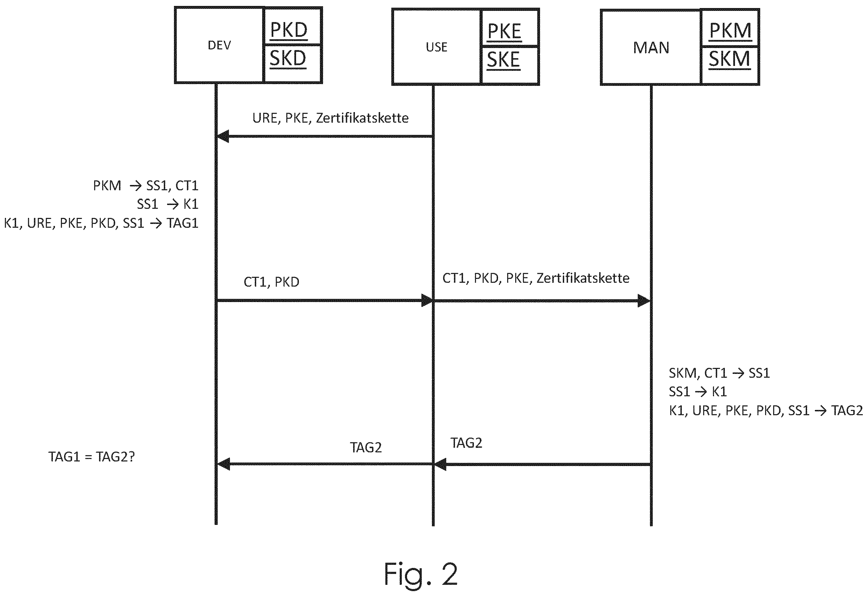

Bei dem in Figur 2 dargestellten Ausführungsbeispiel wird ein Onboarding für ein sicheres Gerät vertrauenswürdig durchgeführt. Hier kooperieren drei Parteien, im dargestellten Ausführungsbeispiel das industrielle Gerät DEV selbst, ein Endnutzer USE, d. h. ein Betreiber des Geräts DEV, sowie der Hersteller MAN des Geräts DEV. Alle drei Parteien müssen mit mindestens einem KEM-Schlüsselpaar ausgestattet sein. Vorzugsweise sollten alle drei Entitäten jeweils ein vertrauenswürdiges KEM-Zertifikat für ihren eigenen öffentlichen KEM-Schlüssel besitzen, das jeweils mindestens diesen öffentlichen KEM-Schlüssel enthält und von einer vertrauenswürdigen Entität generiert wurde, bevor das in Fig. 2 dargestellte Ausführungsbeispiel des erfindungsgemäßen Verfahrens gestartet wird. Eine solche vertrauenswürdige Entität wird beispielsweise durch eine vertrauenswürdige Zertifizierungsstelle gebildet.

Darüber hinaus wird der öffentliche KEM-Schlüssel oder das KEM-Zertifikat des Herstellers MAN während der Herstellung sicher im Industriegerät gespeichert, so dass dessen Integrität geschützt ist.

Das Onboarding erfolgt mit den nachfolgend erläuterten Verfahrensschritten:
Zunächst beginnt der Nutzer USE, der das industrielle Gerät DEV in ein industrielles Netzwerk, beispielsweise ein Fertigungsnetzwerk, einbinden möchte, mit der Generierung und dem Senden einer Benutzeranforderung URE einschließlich der Stammzertifizierungsstelle der Nutzerdomäne und des öffentlichen KEM-Schlüssels PKE des Nutzers USE und möglicherweise einer Zertifikatskette des zugehörigen KEM-Zertifikats.

Das Gerät DEV empfängt die Benutzeranforderung URE und prüft sie. Das Gerät DEV verifiziert das KEM-Zertifikat und speichert die Stammzertifizierungsstelle und den öffentlichen KEM-Schlüssel PKE des Nutzers USE sowie die Zertifikatskette. Zu diesem Zeitpunkt kennt das Gerät DEV den Nutzer USE noch nicht und wird seinen Hersteller MAN als dritte Partei direkt auffordern, die Vertrauenswürdigkeit gegenüber dem Nutzer USE zu beweisen und zu bestätigen. Zu diesem Zweck kapselt das Gerät DEV den öffentlichen KEM-Schlüssel PKM seines Herstellers MAN, welchen das Gerät DEV bereits während seiner Herstellung integritätsgeschützt gespeichert hat. Dies führt zu einem ersten Chiffrat CT1 und einem ersten Geheimnis SS1, wobei das Chiffrat CT1 zusammen mit dem öffentlichen KEM-Schlüssel PKD des Geräts DEV direkt an den Nutzer USE zurückgesendet werden kann. Das erste Geheimnis SS1 wird dann als Eingabe an eine Schlüsselableitungsfunktion KDF weitergeleitet, um einen ersten Sitzungsschlüssel K1 zu berechnen. Schließlich verwendet das Gerät DEV den ersten Sitzungsschlüssel K1 und einen AEAD-Algorithmus, beispielsweise AES-GCM, um einen ersten Authentifizierungs-Tag TAG1 aus dem U-ser-Request, dem Stammzertifikat, dem öffentlichen KEM-Schlüssel PKE des Nutzers USE sowie dem öffentlichen KEM-Schlüssel des Geräts PKD zu berechnen. Alternativ kann eine MAC- oder HMAC-Berechnung herangezogen werden, um dieses erste Authentifizierungs-Tag TAG1 zu erhalten. Dies würde die Schlüsselableitungsfunktion und den AEAD-Algorithmus ersetzen. Der so erhaltene erste Authentifizierungs-Tag TAG1 muss sicher, d. h. vertraulich und integritätsgeschützt, aufbewahrt werden. Der erste Authentifizierungs-Tag TAG1 ist erforderlich, um die spätere Bestätigung des Herstellers MAN zu überprüfen. Wenn sowohl die Integrität als auch die Vertraulichkeit nicht gewährleistet sind, kann ein Angreifer den ersten Authentifizierungs-Tag TAG1 vom Gerät DEV extrahieren oder ändern und als gefälschte Authentifizierung zurücksenden.

Der Nutzer USE erhält sowohl das erste Chiffrat CT1 als auch den öffentlichen KEM-Schlüssel PKD des Gerätes DEV und fügt das erste Chiffrat CT1 und den öffentlichen KEM-Schlüssel PKD in seinen User-Request URE ein und fügt darüber hinaus auch einen öffentlichen KEM-Schlüssel PKE des Nutzers USE einschließlich der zugehörigen Zertifikatskette ein. Der Nutzer USE leitet nachfolgend den so vervollständigten User-Request URE an den Hersteller MAN weiter.

Der Hersteller MAN erhält den User-Request URE mit den erwähnten Informationen vom Nutzer USE und prüft sie, beispielsweise mittels einer Prüfung der Zertifikatskette des öffentlichen KEM-Schlüssels anhand eines Stammzertifikats. Fällt die Prüfung positiv aus, so schließt der Hersteller MAN, dass der Nutzer USE vertrauenswürdig ist. Der Hersteller MAN generiert daraufhin eine Bestätigung des User-Requests URE des Nutzers USE gegenüber dem Gerät DEV. Dazu entkapselt der Hersteller MAN zunächst den Chiffrat CT1 mit seinem eigenen privaten KEM-Schlüssel SKM, welcher mit dem während der Herstellung des Geräts DEV im Gerät DEV gespeicherten öffentlichen KEM-Schlüssel PKM korrespondiert. Im Erfolgsfall generiert der Hersteller so das Geheimnis SS1. Mit einer Schlüsselableitungsfunktion KDF leitet der Hersteller MAN den Sitzungsschlüssel K1 vom Geheimnis SS1 ab. Schließlich verwendet der Hersteller MAN den Sitzungsschlüssel K1 mit einem AEAD-Algorithmus, um einen zweiten Authentifizierungs-Tag TAG2 aus dem User-Request URE des Nutzers USE, dem Stammzertifikat des Nutzers USE, dem öffentlichen KEM-Schlüssel PKE des Nutzers USE sowie dem öffentlichen KEM-Schlüssel PKD des Geräts DEV zu berechnen. Alternativ kann eine MAC- oder HMAC-Berechnung verwendet werden, um diesen zweiten Authentifizierungs-Tag TAG2 zu erhalten, welcher die Schlüsselableitungsfunktion KDF und den AEAD-Algorithmus ersetzen würde. Dieser Authentifizierungs-Tag TAG2 wird an den Nutzer USE gesendet.

Der Nutzer USE leitet den zweiten Authentifizierungs-Tag TAG2 an das Gerät DEV weiter.

Das Gerät DEV erhält den zweiten Authentifizierungs-Tag TAG2 vom Nutzer USE und vergleicht ihn mit dem zuvor berechneten und sicher, d. h. vertraulich und integritätsgeschützt, gespeicherten ersten Authentifizierungs-Tag TAG1. Wenn erster TAG1 und zweiter Authentifizierungs-Tag TAG2 gleich sind, authentifiziert das Gerät DEV, dass die Benutzeranfrage URE vom, per se als vertrauenswürdig geltenden, Hersteller MAN des Geräts DEV geprüft und akzeptiert worden ist, da nur der Hersteller MAN das Geheimnis SS1 erhalten kann. Zudem stellt die Authentifizierung sicher, dass die Benutzeranfrage URE nicht modifiziert oder geändert worden ist, also integer ist, da erster TAG1 und zweiter Authentifizierungs-Tag TAG2 gleich sind. Wenn jedoch erster TAG1 und zweiter Authentifizierungs-Tag TAG2 nicht gleich sind, wird das gesamte Protokoll wiederholt. Wenn keine Übereinstimmung zwischen erstem TAG1 und zweitem Authentifizierungs-Tag TAG2 erzielt werden kann, lehnt das Gerät DEV das Onboarding ab, da der Nutzer USE nicht als vertrauenswürdig gegenüber dem Gerät DEV bestätigt werden kann. In diesem Fall wird zudem eine Warnmeldung, beispielsweise in Gestalt eines Warntons, ausgegeben.

Optional kann in weiteren, nicht eigens dargestellten Ausführungsbeispielen der Hersteller MAN informiert werden, wenn das richtige Gerät DEV erfolgreich in die Nutzerdomäne integriert wurde. Hierzu ist das oben beschriebene Protokoll entsprechend abzuändern: Dazu kapselt der Hersteller MAN beim Generieren der Bestätigung der Benutzeranfrage URE den öffentlichen KEM-Schlüssel des Geräts PKD. Das Geheimnis SS2 wird vom Hersteller MAN sicher, d. h. vertraulich und integritätsgeschützt, gespeichert, während das Chiffrat CT2 zusammen mit dem Authentifizierungs-Tag TAG2 an den Nutzer USE gesendet wird. Andernfalls kann ein Angreifer dieses Geheimnis SS2 auslesen und als gefälschte Bestätigung an den Hersteller MAN zurücksenden, um fälschlicherweise zu bestätigen, dass das Gerät DEV ein korrektes Onboarding durchlaufen hat. Zudem sendet der Nutzer USE nicht allein den zweiten Authentifizierungs-Tag TAG2 an das Gerät DEV, sondern der Nutzer USE leitet zusätzlich das zweite Chiffrat CT2 an das Gerät DEV weiter.

Weiterhin entkapselt das Gerät DEV das zweite Chiffrat CT2 zusätzlich mit seinem eigenen privaten KEM-Schlüssel SKD. Daraus berechnet das Gerät DEV ein drittes Geheimnis SS2' und leitet dieses dritte Geheimnis SS2' an den Hersteller MAN weiter. Der Hersteller MAN vergleicht das dritte Geheimnis SS2` mit dem zuvor berechneten zweiten Geheimnis SS2. Sind zweites SS2 und drittes Geheimnis SS2` gleich, so garantiert der Hersteller MAN, dass das richtige Gerät DEV das Onboarding durchlaufen hat.

## Patentansprüche

1. Verfahren zur Prüfung einer Authentizität einer Nachricht (SWU, URE) mithilfe eines Bereitstellers eines Geräts (DEV) durch dieses Gerät (DEV), bei welchem durch das Gerät aus der Nachricht (SWU, URE) mittels eines mit einem privaten Schlüssel (SKM) des Bereitstellers umkehrbaren asymmetrischen kryptographischen Verfahrens mit einem öffentlichen Schlüssel des Bereitstellers (PKM) und mit der Nachricht (SWU) eine erste Auszeichnung (TAG1) und ein Chiffrat (CT2) generiert werden, wobei das Chiffrat (CT2) nachfolgend an den Bereitsteller gesendet wird und wobei vom Bereitsteller mittels des privaten Schlüssels (SKM) und des Chiffrats (CT2) mittels der Umkehrung des kryptographischen Verfahrens eine zweite Auszeichnung (TAG2) erhalten wird, wobei, vorzugsweise ausschließlich, bei einer Übereinstimmung der ersten Auszeichnung (TAG1) und der zweiten Auszeichnung (TAG2) miteinander auf die Authentizität geschlossen wird.

2. Verfahren nach dem vorhergehenden Anspruch, bei welchem bei einer fehlenden Übereinstimmung von erster (TAG1) und zweiter Auszeichnung (TAG2) ein Warnsignal, insbesondere eine Warnmeldung und/oder ein akustisches Warnsignal und/oder ein optisches Warnsignal, generiert wird.

3. Verfahren nach einem der vorhergehenden Ansprüche, bei welchem das asymmetrische kryptographische Verfahren derart ausgebildet ist, dass es aus der Nachricht mittels eines Schlüsselkapselungsverfahrens mit einem öffentlichen Schlüssel des Bereitstellers das Chiffrat (CT2) und einen ersten Sitzungsschlüssel (K1) generiert, wobei mittels des ersten Sitzungsschlüssels (K1) gemeinsam mit der Nachricht (SWU, URE) die vom ersten Sitzungsschlüssel (K1) und von der Nachricht (SWU, URE) abhängige erste Auszeichnung (TAG1) generiert wird.

4. Verfahren nach einem der vorhergehenden Ansprüche, bei welchem die Umkehrung des kryptographischen Verfahrens derart erfolgt, dass mittels des Chiffrats (CT2) und des privaten Schlüssels (SKM) des Bereitstellers (MAN) ein zweiter Sitzungsschlüssel (K2) generiert wird und mittels des zweiten Sitzungsschlüssels (K2) und der Nachricht (SWU) die zweite Auszeichnung (TAG2) generiert wird.

5. Verfahren nach einem der vorhergehenden Ansprüche, bei welchem das kryptographische asymmetrische Verfahren ein Schlüsselkapselungsverfahren ist und bei welchem die Umkehrung des kryptographischen Verfahrens ein mit den Schlüsselkapselungsverfahren korrespondierendes Schlüsselentkapselungsverfahren ist.

6. Verfahren nach einem der vorhergehenden Ansprüche, bei welchem die Nachricht (URE) eine Nutzeranfrage, insbesondere eine Provisionierungs- und/oder Konfigurationsanfrage ist.

7. Verfahren nach einem der vorhergehenden Ansprüche, bei welchem die Nachricht (SWU) eine Software und/oder ein Softwareupdate ist.

8. Verfahren nach einem der vorhergehenden Ansprüche, bei welchem die zweite Auszeichnung (TAG2) über einen Nutzer (USE) erhalten wird, insbesondere über einen Nutzer (USE) der Nutzeranfrage (URE).

9. Verfahren nach einem der vorhergehenden Ansprüche, bei welchem das Gerät (DEV) ein industrielles Gerät (DEV) eines industriellen Netzwerks, insbesondere eines Internet-der-Dinge-Netzwerks, ist und/oder ein Fertigungsgerät und/oder ein Wartungsgerät und/oder ein Logistikgerät ist.

10. Gerät, ausgebildet und eingerichtet zur Ausführung eines Verfahrens nach einem der vorhergehenden Ansprüche.
